(19) Europäisches Patentamt
European Patent Office
Office européen des brevets

(11) EP 2 685 822 B1

(12) **EUROPEAN PATENT SPECIFICATION**

(45) Date of publication and mention of the grant of the patent:
**22.04.2015 Bulletin 2015/17**

(21) Application number: **12710795.1**

(22) Date of filing: **14.03.2012**

(51) Int Cl.:
***A01P 3/00*** *(2006.01)*
***A01N 35/02*** *(2006.01)*
***A01N 47/38*** *(2006.01)*
***A01N 43/50*** *(2006.01)*

(86) International application number:
**PCT/IB2012/051203**

(87) International publication number:
**WO 2012/123904 (20.09.2012 Gazette 2012/38)**

(54) **A FUNGICIDAL COMPOSITION**
FUNGIZIDE ZUSAMMENSETZUNG
COMPOSITION FONGICIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.03.2011 ZA 201102048**

(43) Date of publication of application:
**22.01.2014 Bulletin 2014/04**

(73) Proprietor: **Ica Laboratories CC**
**7600 Stellenbosch (ZA)**

(72) Inventors:
- **SCHREUDER, Wouter**
  **7600 Stellenbosch (ZA)**
- **ALBELDAS, Michael**
  **7600 Stellenbosch (ZA)**

(74) Representative: **Rees, Kerry**
**WP Thompson**
**55 Drury Lane**
**London WC2B 5SQ (GB)**

(56) References cited:
**WO-A1-96/19111**
**WO-A2-93/15605**
**WO-A2-03/028451**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 685 822 B1

## Description

This invention relates to the treatment of plant diseases. It relates, in particular, to synergistic fungicidal compositions for the treatment or control of plant diseases caused by or associated with phytopathogenic organisms and to methods for the treatment or control of plant diseases caused by or associated with phytopathogenic organisms.

A synergistic composition is a composition in which the combined effect of two components is substantially greater than the sum of the effect of each component alone. The synergistic fungicidal compositions of the invention are produced by combining fungicidally active compounds of the conazole family selected from imazalil, prochloraz, metal complexes thereof, and mixtures of any two or more thereof with n-hexanal.

The fungicidal effect of the synergistic composition of the invention is substantially greater than the effect which is obtained from each component by itself.

The fungicidal compounds of the conazole family, used in the composition of the invention are imidazoles which contain a halogenated phenyl group. These compounds are also known as conazole steroid demethylation inhibitors. Conazole type fungicidal compounds used in the preparation of the synergistic composition of the invention are imazalil, prochloraz and their metal complexes, in particular, the manganese or copper complexes. The structure of imazalil is shown in Scheme 1.

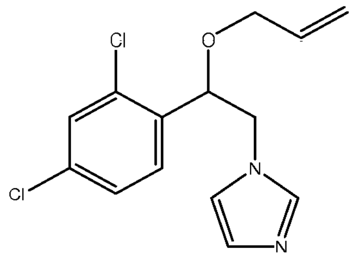

Scheme 1

By themselves the fungicidal compounds of the composition of the invention, such as imidazalil and prochloraz, are limited in their scope and are not very effective in controlling some of the more important plant diseases and fungal infections. There has in fact, in the last decade, been an alarming increase in the resistance of fungi to imazalil and prochloraz. In this regard the Applicant is aware of patent applications which disclose combinations of these fungicidal compounds with other fungicidally active compounds. Fungicidal combinations comprising the post-harvest antifungal agents imazalil, pyrimethanil, prochloraz or thiabendazole have also been disclosed for example in WO99/12422, which describes synergistic compositions of imazalil and epoxiconazole and in WO03/011030, which describes fungicidal compositions comprising pyrimethanil and imazalil. Research has also been conducted on the use of imazalil with more so-called eco-friendly organic compounds as described, for example, by Jianjun Luo and Qunfang Weng (2009), Control of citrus postharvest green and blue mold by tea saponin combined with imazalil and procloraz, Postharvest Biology 56 (2010) 39-43. WO03/15605 describes synergistic fungicidal mixtures comprising prochloraz and either 4-methylcatechol or citric acid.

Some volatile fungicidal oils are natural secondary metabolites which by themselves have erratic fungicidal activity. The use of most of these oils is not commercially viable because of their limited efficacy, specificity, phytotoxicity, post application protection and the need for large doses to have any substantial effect on the pathogen population in commercial applications, see for example Lisa J. Skog (2000), Use of natural fruit volatiles for reduction of postharvest rot of stonefruits and pears, University of Guelph, Ontario, Tripathi P and Dubey NK (2004); Exploitation of natural products as an alternative strategy to control postharvest fungal rotting of fruit and vegetables, Postharvest Biology and Technology 2004: 32:235-245", and Mohini Sharma, Jissy K. Jacob (2010), Hexanal and 1-MCP treatments for enhancing the shelf life and quality of sweet cherry (Prunus avium.), Department of Plant Agriculture, University of Guelph, Guelph, Ontario. Patents dealing with essential oils include JP2004208558-A (2004*), A method for retaining freshness of fruit and vegetables and preserving fruits and vegetables in presence of preset concentration of the essential oil allyl-isothiocyanate* and US 6045844 (2000*) A method for increasing aroma and reducing fungal growth in vegetables and fruits,* which describes a method in which hexanal is used in a controlled atmosphere to treat harvested fruit to control penicillium sp. and botrytis. In addition, WO/1993/006735, *Post harvest fruit protection using components of natural essential oils in combinations with coating waxes* describes the use of large doses of hexanal in combination with waxes to suppress fungi populations of *botritis cinerea, rhizopus stolonifer, pythium ultimo, aspergillus niger and penicillium digita tum.*

Surprisingly, the Applicant has found that there are very strong synergistic effects between the fungicides of imazalil or prochloraz and n-hexanal. The fungicidal effect of of this combination is more than double that which would be expected from the use of either of the two components alone. Hexanal is not used in commercial agriculture because

of its very limited ability to control fungi and also because excessively large doses which can cause phytotoxicity to the plant cell walls are required. Even then poor results have been achieved. Hexanal does however have the advantage of being non-toxic to humans at recommended rates and is food-grade approved.

Traditional fruit markets are also increasingly demanding products with lower levels of pesticides in order to satisfy the safety demands of the general public. In addition, new higher-value markets based on organically grown, sustainable, environmentally friendly, ecological or "green" agricultural produce have emerged and are becoming more popular. There is accordingly a clear and increasing need for new products which are more "eco-friendly" and yet commercially viable. This, in turn, requires a reduction of the process doses of hard chemical products applied to fruits. Also, due to the widespread and continuous use of imazalil and prochloraz, there has been a proliferation of resistant biotypes of fungi and the build-up of single, double and even triple-resistant isolates in the population of the pathogens in commercial packing houses seriously compromises the effectiveness of current treatments.

A first object of the present invention is to provide synergistic fungicidal compositions possessing a broad spectrum of activity against fungal diseases without increasing the overall toxicity of the composition to humans and without causing phytotoxicity to the plant or plant product. Another object of the present invention is to provide a synergistic fungicidal composition, which can effectively control fungal strains resistant to the conazole family of compounds. A further object of the invention is to provide fungicidal compositions possessing both a preventive effect and a curative effect, in particular an improved curative effect compared with fungicidal compositions currently used. A further object of the present invention is to provide fungicidal compositions which can effectively control fungal strains resistant to known fungicidal compositions. A further object of the present invention is to provide fungicidal compositions which are effective at lower doses compared with the doses currently applied. A further object of the present invention is to provide fungicidal compositions which are more environmentally friendly. A further object of the present invention is to provide a composition possessing preventive, curative and eradicant and anti-sporulant properties. A further object of the present invention is to provide a composition useful for the control of plant phytopathogenic organisms after harvest, notably on post-harvest fruit. Other objects of the invention will be clear from the disclosure of the invention which is set out below. Based on the unexpected discovery of the strong synergy between compounds of the conazole family and the fungicidal volatile oils, it has been found that the above objectives can be achieved using the synergistic fungicidal compositions which are the subject of the present invention.

According to a first aspect of the invention, there is provided a synergistic fungicidal composition for use in the treatment or control of plant diseases caused by or associated with phytopathogenic fungi the composition including: at least one conazole fungicide, wherein the conazole fungicide is selected from imazalil, prochloraz, metal complexes thereof and mixtures of any two or more thereof; and at least one fungicidal compound which is a fungicidal volatile oil, wherein the fungicidal volatile oil is n-hexanal.

In the composition according to the invention, the ratio of the quantities of imazalil or prochloraz, and n-hexanal generally ranges from 1 to 5 to 1 to 0.25 is preferably 1 to 3, more preferably 1 to 2, and still more preferably 1 to 1. Usually, the compositions according to the invention comprise between 0.1 and 100%, preferably between 1 and 80%, of the active compounds, whether these compounds are combined, or whether they are in the form of two active ingredients used separately. Unless otherwise stated, the proportions and percentages used herein are proportions or percentages by weight i.e. weight per weight (or (w/w).

The ratio between the weights of the one conazole fungicide selected from imazalil, prochloraz, metal complexes thereof and mixtures of any two or more thereof and n-hexanal may range from 1 to 5 to 1 to 0.25 more preferably 1 to 3, still more preferably 1 and 2, and most preferably 1 and 1.

In practice the active substances of the compositions of the invention are rarely used alone. The active ingredients are usually combined with a solid carrier or a liquid carrier. The carrier will be of the type which is suitable for use, in particular, in the agricultural field and may optionally include one or more surfactants and one or more formulation agents.

In an embodiment of the present invention, the fungicidal components of the compositions according to the invention may be in the form of tank mixes. These are usually in the form of dilute fungicidal compositions. Generally such tank mix fungicidal compositions are prepared by mixing the different components of the composition in a reservoir of the application device.

The compositions according to the invention may comprise up to 99% of the carrier and/or up to about 25% of the one or more surfactants and/or up to about 25% of one or more formulating agents. The term "carrier" designates a natural or synthetic, organic or inorganic material with which the active ingredient(s) are combined in the compositions according to the invention, in particular to facilitate their application to plants, fruit, seeds or to the soil. This carrier is therefore generally inert and should be agriculturally acceptable and broadly compatable with the treated plant or with the fruit of the plant.

The composition of the invention may thus include a solid carrier, selected from natural resins, synthetic resins, waxes, silicates, clay powders, clay granules, diatomaceous earth, bentonite acidic clay, synthetic silicon oxide hydrate talcs, ceramics, sericite, quartz, sulphur, activated charcoal, calcium carbonate, hydrated silica, industrial fertilizers and

mixtures of any two or more thereof.

The clay may be a fine prowder and may in particular be kaolinic clay. The industrial fertilizers may be ammonium sulphate, ammonium phosphate, ammonium nitrate, urea or ammonium chloride.

The composition of the invention may thus, instead, include a liquid carrier selected from water, alcohols, ketones, petroleum fractions, aromatic hydrocarbons, nonaromatic hydrocarbons, esters, nitriles, ethers, amides, halogenated hydrocarbons, dimethyl sulphoxide, vegetable oils, fruit coating waxes and mixtures of any two of more thereof.

The alcohols may be methanol or ethanol. The ketone may, in particular be acetone, methyl ethyl ketone or cyclohexanone. The aromatic hydrocarbons may be benzene, toluene, xylene, ethylbenzene or methylnaphthalene. The nonaromatic hydrocarbons may be hexane, cyclohexane, kerosene or gas oil or liquefied gas. The esters may be ethyl acetate or butyl acetate. The nitriles may be acetonitrille or isobutyronitrile. The ethers may be diisopropyl ether or dioxane. The amide may be N,N-dimethylformamide or N,N-dimethylacetamide. The halogenated hydrocarbons may be dichloromethane, trichloroethane or carbon tetrachloride. The vegetable oils may be soybean oil or cottonseed oil.

Generally, at least one surfactant will be present and a surfactant is generally essential when at least one of the active ingredients and/or the inert carrier is not soluble, in particular in water, in the case where the carrier agent for the application is water. The surfactant/s may be emulsifying, dispersing or wetting agents of the ionic or nonionic type.

The composition may thus, further, include a surfactant selected from emulsifying agents, dispersing agents, ionic wetting agents, non-ionic wetting agents and mixtures of any two or more thereof. In particular the surfactants may be selected from salts of polyacrylic acids, salts of lignosulphonic acids, salts of phenolsulphonic acids, salts of naphthalenesulphonic acids, polycondensates of ethylene oxide with fatty acids, polycondensates of ethylene oxide with fatty amines, substituted phenols, salts of sulphosuccinic acid esters, derivatives of taurine, phosphoric esters of polyoxyethylated alcohols, phosphoric esters of polyoxyethylated phenols, alkyl sulphonate salts, alkylaryl sulphonates, alkylaryl ethers, polyoxyethylenic derivatives, polyethylene glycol ethers, polyalcohol esters, derivatives of sugars, derivatives of alcohols and mixtures of any two or more thereof.

In the compositions according to the invention, it is also possible to combine with the active compounds, other active compounds or agents such as, for example, solvents, protective colloids, adhesives, thickening agents, thixotropic agents, penetrating agents, stabilizing agents including isopropyl hydrogen phosphate, 2,6-di-tert-butyl-4-methylphenol, 2-tert-butyl-4-methoxyphenol and 3-tert-butyl-4-methoxyphenol, vegetable or minerals oils, fatty acids or esters thereof, sequestering agents, dispersing agents including casein, gelatine, saccharides and in particular starch powder, gum arabic certain derivatives of cellulose or alginic acid, derivatives of lignin, bentonite, synthetic polymers soluble in water, in particular polyvinyl alcohol, polyvinylpyrrolidone, polyacrylic acids, and the like, as well as other active ingredients known or their pesticidal, in particular insecticidal or fungicidal properties; or for their plant growth promoting properties, in particular fertilizers, and or the for their insect or plant growth regulating properties.

The fungicidal compositions of the invention may be provided in a variety of forms. The composition of the invention may be in a form selected from aerosols, suspensions, cold fogging concentrates, hot fogging concentrates, dustable powders, emulsifiable concentrates, aqueous emulsions, aqueous type emulsions, oil/inverse type emulsions, encapsulated granules, fine granules, suspension concentrates, compressed gases, gas generating products, macrogranules, microgranules, oil-dispersible powders, oil-miscible liquids, pastes, plant rodlets, smoke candles, smoke cartridges, smoke generators, smoke pellets, smoke rodlets, smoke tablets, smoke tins, soluble concentrates, soluble powders, suspension concentrates, flowable concentrates, tracking powders, ultra low volume liquids, ultra low volume suspensions, vapour releasing products, solutions, water dispersible granules, water dispersible tablets, water dispersible powders, water soluble granules, water soluble tablets, water soluble powders, wettable powders and mixtures of any two or more thereof.

The aerosol suspension may be in an aerosol dispenser. The suspension may be a suspension of capsules. The suspension concentrate will typically be used for seed treatment. The powders will typically be used for dry seed treatment. The composition may be in the form of a seed coated with a pesticide. The solution will typically be used for seed treatment. The water dispersible powder will typically be used for slurry treatment. The water soluble powder will typically be used for seed treatment.

For dustable powder or dispersion type formulations, the content of active compounds may be up to 100%. Similarly, in formulations in the form of granules, in particular those obtained by extrusion, compacting, impregnation of a granular support, or granulation using a powder, the content of the fungicidal compounds in the granules is preferably between about 0.5 and 80%.

The fungicidal compositions which are concentrated compositions, may include the active compound in the form of emulsifiable or soluble concentrates, in an amount of from 20 to 100% of the active ingredients. The emulsions or solutions ready for application may contain from 0.001 to 40% of active ingredients. The expression "active ingredients" in this invention should be understood, where appropriate, to include within its meaning an active ingredient or a fungicidal compound alone and also a combination of these two active ingredients.

In addition to the solvent, the emulsifiable concentrates may contain, when necessary, 2 to 20% of appropriate additives such as stabilizing agents, surfactants, penetrating agents, corrosion inhibitors, colouring agents or adhesives.

The compositions according to the invention in the form of suspension concentrates, which can also be applied by spraying, are prepared in the form of stable, fluid products which do not form deposits. They usually contain from 2 to 75% of active ingredients, from 0.5 to 15% of surfactants, from 0.1 to 10% of thixotropic agents, from 0 to 10% of appropriate additives, such as antifoaming agents, corrosion inhibitors, stabilizing agents, penetrating agents and adhesives and, as carrier, water or an organic liquid in which the active ingredient(s) are sparingly soluble or insoluble, or alternatively mixtures of several of these solvents, organic or otherwise.

Some solid organic substances or inorganic salts may be dissolved in the carrier to retard or prevent sedimentation. Alternatively such substances may be used as an antifreeze agent for water.

The fungicidal compositions according to the invention having the form of wettable powders or flo-dusts are usually prepared so that they contain from 20 to 95% of active ingredients. They may contain, in addition to a solid carrier, from 0 to 5% of wetting agent, from 3 to 10% of a dispersing agent, and where appropriate, from 0 to 10% of one or more stabilizing agents and/or other additives, such as penetrating agents, adhesives, or anticaking agents, colouring agents and the like. To obtain these flo-dusts or wettable powders, the active ingredient(s) are intimately mixed in appropriate mixers with additional substances and ground in mills or other appropriate grinders. Flo-dusts are then obtained whose wettability and suspension are particularly advantageous. They can be suspended with water at any desired concentration. Rather than wettable powders, it is possible to prepare the fungicidal compositions of the invention in the form of pastes. The conditions and modalities for the preparation and use of these pastes are similar to those of wettable powders or flo-dusts.

As already stated, aqueous dispersions and emulsions, for example the fungicidal compositions obtained by diluting with water a wettable powder or an emulsifiable concentrate according to the invention, are included in the general context of the present invention. The emulsions may be of the water-in-oil or oil-in-water type and they may have a thick or fairly thick consistency.

The various variants of carrying out the methods of the invention may also be combined or associated, completely or partially, with each other and persons skilled in the art will easily know how to determine the associations or combinations of modes of application according to the invention which are best suited to the use of the active compounds which they envisage.

In addition to the fungicidal compounds of the conazole family and the volatile compounds referred to above, the compositions of the invention may also comprise other active compounds and in particular one or more active compounds useful for protecting plants against pests. Among such active compounds, the compositions may include one or more fruit coating wax compound/s, insecticidal, acaricidal, nematicidal, herbicidal or fungicidal compounds or growth regulating compounds.

The additional insecticidally, acaricidally or nematicidally active ingredients which may be used alone or in combination with other active ingredients, in particular pesticides, in the composition according to the invention may include abamectin, acephate, acetamiprid, oleic acid, acrinathrin, aldicarb, alanycarb, allethrin [(1 R)-isomers], α-cypermethrin, amitraz, azadirachtin, azamethiphos, azinphos-ethyl, azinphos-methyl, bacillus thurigiensi, bendiocarb, benfuracarb, bensultap, betacyfluthrin, beta-cypermethrin, bifenthrin, bioallathrin, bioallethrin (isomer s-cyclopentenyl), bioresmethrin, borax, buprofezin, butocarboxim, butoxycarboxim, piperonyl butoxide, cadusafos, carbaryl, carbofuran, carbosulphan, cartap, cartap hydrochloride, chlordane, chlorethoxyfos, chlorfenapyr, chlorfenvinphos, chlorfluazuron, chlormephos, chloropicrin, chlorpyrifos, chlorpyrifos-methyl, mercury chloride, coumaphos, cryolite, cryomazine, cyanophos, calcium cyanide, sodium cyanide, cycloprothrin, cyfluthrin, cyhalothrin, cypermethrin, cyphenothrin[(1R)-trans-isomers], dazomet, DDT, deltamethrin, demetons-methyl, diafenthiuron, diazinon, ethylene dibromide, ethylene dischloride, dichlorvos, dicrotophos, diflubenzuron, dimethoate, dimenthylvinphos, diofenolan, disulfoton, DNOC, empenthrin [(EZ)-(1R)-isomers], endosulfan, esfenvalerate, ethiofencarb, ethion, ethiprole having the chemical name 5-amino-3-cyano-1-(2, 6-dichloro-4-triflooromethylphenyl)-4-ethylsulphinylpyrazole, ethoprophos, etofenprox, etrimfos, famphur, fenitrothion, fenobucarb, fenoxycarb, fenpropathrin, fenthion, fenvalerate, fipronil, flucycloxuron, flucythrinate, flufenoxuron, flufenprox, flumethrin, fluofenprox, sodium fluoride, sulphuryl fluoride, fonofos, formetanate, formetanate hydrochloride, formothion, furathiocarb, gamma-HCH, halofenozide, heptachlor, heptenophos, hexaflumuron, sodium hexafluorosilicate, tar oils, petroleum, hydramethylnon, hydrogen cyanide, hydroprene, imidacloprid, isazofos, isofenphos, isoprocarb, methyl isothiocyanal, isoxathion, lambda-cyhalothrin, pentachlorophenyl laurate, lufenuron, malathion, mecarbam, methacrifos, methamidophos, methidathion, methiocarb, methomyl, methoprene, methoxychlor, metolcarb, mevinphos, milbemectin, monocrotophos, naled, nicotine, nitenpyram, nithiazine, novaluron, omethoate, oxamyl, oxydemeton-methyl, paecilomyces fumosoroseus, parathion, parathion-methyl, pentachlorophenol, sodium pentachlorophenoxide, permethrin, phenothrin [(1 R)-trans-isomer], phenthoate, phorate, phosalone, phosmet, phosphamidon, phosphine, aluminium phosphide, magnesium phosphide, zinc phosphide, phoxim, pirimicarb, pirimiphos-ethyl, pirimiphos-methyl, calcium polysulphide, prallethrin, profenofos, propaphos, propetamphos, propoxur, prothiofos, pyraclofos, pyrethrins (chrysanthemates, pyrethrates, pyrethrum), pyretrozine, pyridaben, pyridaphenthion, pyriproxyfen, quinalphos, resmethrin, rolenone, silafluofen, sulcofuron-sodium, sulfotep, sulfuramide, sulprofos, α-fluvalinate, tebufenozide, tebupirimfos, teflubenzuron, tefluthrin, temephos, terbufos, tetrachlorvinphos, tetramethrin, tetramethrin [(1 R)-isomers],

theta-cypermethrin, thiocyclam, thicyclam hydrogen oxalate, thiodicarb, thiofanox, thiometon, tralomethrin, transfluthrin, triazamate, triazophos, trichlorfon, triflumuron, trimethacarb, vamidothion, xylylcarb, zeta-cypermethrin, 3-acetyl-5aminol-[2,6-dichloro-4(trifluoromethyl)phenyl]-4-methyl-sulphinylpyrazole and mixtures of any two or more thereof.

The additional fungicidally active ingredients which may be used alone or in combination with other active ingredients, in particular pesticides, in the composition according to the invention may include 2-phenylphenol, 8-hydroxyquinoline sulphate, ampelomyces quisqualis, azaconazole, azoxystrobin, bacillui, subtilis, benalaxyl, benomyl, biphenyl, bitertanol, blasticidin-s, Bordeaux mixture, borax, bromuconazole, bupirimate, calboxin, calcium polysulphide, captafol, captan, carbendazim, carpropamid, carpropamid, chinomethionat, chlorothalonil, chlozolinate, copper hydroxide, copper naphthenate, copper oxychloride, copper sulphate, copper oxide, cymoxanil, cyproconazole, cyprodinil, dazomet, debacarb, dichlofluanid, dichlomezine, dichlorophen, diclocymet, dicloran, diethofencarb, difenoconazole, difenzoquat, difenzoquat metilsulphate, diflumetorim, dimethirimol, dimethomorph, diniconazole, diniconazolem, dinobuton, dinocap, diphenylamine, dithianon, dodemorph, dodemorph acetate, dodine, dodine free base, edifenphos, epoxiconazole, ethasulfocarb, ethirimol, etridiazole, famoxadone, fenamidone, fenarimol, fenbuconazole, fenfin, fenfuram, fenhexamid, fenpiclonil, fenpropidin, fenpropimorph, fentin acetate, fentin hydroxide, ferbam, ferimzone, fluazinam, fludioxonil, flouroimide, fluquinconazole, flusilazole, flusulfamide, flutolanil, flutriafol, folpet, formaldehyde, fosetyl, fosetyl-aluminium, fuberidazole, furalaxyl, fusarium oxysporum, gliocladium virens, guazatine, guazatine acetates, GY-81, hexachlorobenzene, hexaconazole, hymexazol, imazalil, imazalil sulphate, imibenconazole, iminoctadine, iminoctadine triacetate, iminoctadine tris[albesilate], ipconazole, iprobenfos, iprodione, iprovalicarb, kasugamycin, kasugamycin, hydrochloride hydrate, kresomix-methyl, mancoppper, mancozeb, maneb, mepanipyrim, mepronil, mercury(II)chloride, mercury(II) oxide, mercury(I) chloride, metalaxyl, metalaxyl-m, metam, metam-sodium, metconazole, methasulfocarb, methyl isothiocyanate, metiram, metominos-trobin, myclotbutanil, nabam, naphthenic acid, natamycin, nickelbis(dimethyldithiocarbamate), nitrothal-isopropyl, nuarimol, octhilinone, ofurace, oleic acid (fatty acids), oxadixyl, oxine-copper, oxycarboxin, penconazble, pencycuron, pentachlorophenol, pentachlorophenyl laurate, perfurazoate, phenyl mercury acetate, phlebiopsis gigantea, phthalide, piperalin, polyoxine b, polyoxines, polyoxorim, potassium hydroxyquinoline sulphate, probenazole, prochloraz, procymidone, propamocarb hydrochloride, propiconazole, propineb, pyrazophos, pyributicarb, pyrifenox, pyrimethanil, pyroquilon, quinoxyfen, quintozene, sec-butylamine, sodium-2-phenylphenoxide, sodium pentachlorophenoxide, spiroxamine, streptomyces griseoviridis, sulphur, tar oils, tebuconazole, tecnazene, tetraconazole, thiabendazole, thifluzamide, thiophanate-methyl, thiram, tolclofos-methyl, tolylfluanid, triadimefon, triadimefon, triadimenol, triazoxide, trichoderma harzianum, tricyclazole, tridemorph, triflumizole, triforine, triticonazole, validamycin, vinclozolin, zinc naphthenate, zineb, ziram.

According to another aspect of the invention, there is provided a method for controlling plant diseases caused by or associated with phytopathogenic organisms on plants or plant products, the method including the step of exposing the plant or plant product to a composition as hereinbefore described.

The invention also extends to the sequential application of the fungicidal compounds. Such a sequential mode of application may in particular take the form of one or more applications of the volatile oil, followed by one or more applications of, for example, imazalil or prochloraz. Obviously, the reverse sequence consisting of one or more applications of imazalil or prochloraz followed by one or more applications of the volatile oil can instead be applied.

Thus, in a preferred aspect of the present invention, wherein the phytopathogenic microorganism is a phytopathogenic fungi and the method comprises the steps of applying to the plants or plant products, either sequentially or simultaneously, at least one conazole fungicide selected from imazalil, prochloraz, metal complexes thereof and mixtures of any two or more thereof and at least one fungicidal compound which is a fungicidal volatile oil in which the fungicidal volatile oil is n-hexanal.

The fungicidal composition of the invention can be applied in different ways including, in particular, dusting, brushing, dipping, spraying, smoking or fogging.

During the application of the active compounds of the composition according to the invention by dipping, in particular of fruit, the solution used advantageously comprises from 0.05 to 3% of active ingredients, preferably from 0.1 to 2%. Other variants will depend on the part(s) of the plant or vegetable which are treated or which are to be treated.

Thus, the methods according to the invention may be carried out for the treatment or protection of plant propagation material or seeds, in particular grain seeds tubers or rhizomes, for the treatment of roots, or alternatively of the fruit or other parts of the plant which possess a substantial economic or agronomic value. Furthermore, the methods of the invention may be carried out at numerous stages in the development of plants, in particular for the treatment of the seeds, seedlings, seedlings for transplantation, plants or fruit before or after harvest.

The crops advantageously treated according to the present invention, include pome fruit such as apples and pears, citrus fruit such as oranges, lemons, limes, I mandarins and grapefruit, stone fruit such as peaches, plums, nectarines, cherries and apricots as well as grapes, potatoes, cucurbits, kiwis, bananas, strawberries, tomatoes, melons and pineapples.

Some of the classes of fungi advantageously treated using the compositions and methods of the invention for different crops are set out below:

pome fruit (apples, pears) *Penicillium expansum, Gloeosporium sp., Botrytis cinerea, Monilinia fructigena, Mucor spp.,*
citrus fruit (oranges, lemons, limes, mandarins, grapefruit) Penicilium italicum, *Penicillium expansum, Penicillium digitatum, Geotrichum candidum, Phomopsis citri, Diplodia natalensis, Colletotrichum gloeosporiodes, Alternaria citri,*
kiwi fruit *Botrytis cinerea,*
mangoes *Colletotichum gloeosporiodes, Diplodia natalensis*
bananas *Thielaviopsis paradoxa, Fusarium semitectum, Colletorrichum musae, Fusarium monililforme, Fusarium paledo-roseum, Acremonium sp., Botryodiplodia theo-bromae, Seratocystis paradoxa, Nigrospora sphaerica,*
tomatoes *Botrytis cinerea, Alternaria alternata,*
melons *Botrytis cinerea, Alternaria solani, Alternaria alternata, Fusarium sp. (oxysporum, roseum, solani), Colletotrichum gloeosporioides, Penicillium sp., Phomopsis sp.*
avocados *Colletotichum gloeosporiodes, Botryodiplodia theobromae*
pineapples *Ceratocystis paradoxa.*

It is important to note that the different variants or embodiments of the compositions and of the methods of treatment and/or protection according to the invention form an integral part of the present invention, it being possible for the said different variants, moreover, to be combined or associated with each other

The plant part may be a fruit and the method may be carried out after harvest. The plants or plant parts may be dipped, sprayed, brushed or incorporated in fruit wax in a solution of the composition. The plants or plant parts may be dipped, sprayed, brushed or incorporated in fruit wax in a solution comprising from 0.01 to 2% of the composition. The fruit or plant part may be selected from the group consisting of pome fruit, citrus fruit, mangoes, kiwi fruits, bananas, potatoes, cucurbits, tomatoes, avocadoes, melons, and pineapples.

The composition may consist of a fungicidal compound of the family of conazoles selected from imazalil and prochloraz, at least one linear volatile oil that is n-hexenal and up to 99% of carrier and/or up to 25% or one or more surfactants and/or up to 25% of one or more formulating agents, wherein the ratio of the quantities of fungicidal compound, and the volatile oil ranges from 0.05 to 10.

In a preferred aspect, the method of the present invention may be used for the treatment of phytopathogenic organisms of fruit comprising contacting said fruit with a composition consisting essentially of a fungicidal compounds of the family of conazoles selected from imazalil and prochloraz, at least one linear volatile oil that is n-hexenal and up to 99% of carrier and/or up to 25% of one or more surfactants and/or up to 25% of one or more formulating agents, wherein the ratio of the quantities or fungicidal compound and the volatile oil ranges from 0.05 to 10, wherein said method is carried out after harvest and wherein the fruit is dipped in a solution comprising from 0.01% to 2% of the composition.

The invention is now illustrated, by way of example with reference to the following Examples which illustrate the various aspects of the present invention. However, these examples are not intended in any way to limit the scope of the invention.

**EXAMPLE 1**

This example illustrates the efficacy of the composition according to the invention for controlling *penicilium italicum.* The trial was carried out *in vitro.*

The fungicidal compositions were used in the form of the formulated product incorporated in PDA medium in superfusion at doses in an amount of 6 μl of fungicidal solutions together with 1000 μl of PDA per well of 20 mm in diameter of a microtitre plate (four repeats/product). One day later, a microdrop of an aqueous suspension of *penicilium italicum* supplemented with 400 ppm of Tween 20 was brought to the surface of each well of the microtitre plate. The cultures were then incubated at 22º C at 60% relative humidity under subdued light until the control culture (without fungicide) had covered the entire surface of the well. The diameter of each colony was then measured and, in comparison with untreated control, a percentage efficacy was calculated using the formula

$$(\text{Diameter of the Control} - \text{Diameter of the Trial} / \text{Diameter of the Control} \times 100)$$

The results are presented in Table 1 below:

TABLE 1

| | Radial growth of fungus (mm) | Efficacy (%) |
|---|---|---|
| Control | 20 | - |
| procloraz at 60 ppm | 18 | 10 |
| hexanal 60 ppm | 19 | 5 |
| hexanal + procloraz at 60 + 60 ppm | 12 | 40 |

Both the individual prochloraz (60ppm), and the hexanal (60ppm) applications showed poor results. When combined, prochloraz (60ppm) and hexanal (60ppm) the composition showed very strong synergy, providing a significant level of control on the growth of the fungus.

**EXAMPLE 2**

This example provides an illustration of the efficacy of the composition according to the invention for combating *penicillium expansum* on apples. The trial was carried out *in vivo.*

The fungicidal compositions were used in solution at the doses detailed in Table 2. Apples of the Golden variety, untreated after harvest, were treated by sprinkling a fungicidal solution up to the run-of limit at the doses described in Table 2 (10 apples per product). Six hours later, the fruit was inoculated by sprinkling an aqueous suspension at 150000 spores/ml of *gloeosporium spp.* obtained from a pre-culture on PDA medium. This inoculation by sprinkling was carried out up to the run-off limit. The fruit was then stored in the dark at 20º C and 100% relative humidity and the scores for the disease were measured three weeks later, for a period of two weeks. The numbers of fruit samples affected by rot were counted and, in comparison with the untreated control, a percentage efficacy was calculated using the formula

(Diameter of the Control - Diameter of the Trial / Diameter of the Control x 100)

TABLE 2

| | Efficacy (%) |
|---|---|
| Control treatment | 0 |
| Hexanal at 1000 ppm | 12 |
| Imazalil at 250 ppm | 28 |
| Hexanal at 1000 ppm + Imazalil at 250 ppm | 65 |

Again, each fungicide composition hexanal (1000ppm) and imidazalil (250ppm), taken in isolation, did not control the growth of the fungus, whereas the composition showed significant synergy and provided a high level of control (hexanal, 1000ppm and imidazalil, 250ppm).

**EXAMPLE 3**

This example shows the efficacy of a composition according to the invention for combating *geotrichum candidum* on citrus. This trial was carried out *in vivo.*

The fungicidal compositions were used in solution at the doses detailed in Table 3. Citrus of the valencia variety, untreated after harvest, was treated by sprinkling a fungicidal solution up to the run-off limit at the doses described in Table 3 of results (10 citrus per product). First inoculation by pre-made wounds was made with a suspension of 150000 spores/ml of *geotrichum candidum,* obtained from a pre-culture on PDA medium. Then six hours later, the product tested was applied up to the run-off limit. The fruit were then stored in the dark at 5ºC and 100% relative humidity and the scores for the disease were measured 28 days later.

The number of fruit samples affected by rot was counted and, in comparison with the untreated control, a percentage efficacy was calculated and show in table 3 below:

TABLE 3

| | Efficacy (%) |
|---|---|
| Control treatment | 0 |
| Hexanal at 1500 ppm | 20 |
| Imazalil at 500 ppm | 0 |
| Hexanal 1500 ppm + Imazalil at 500 ppm | 55 |

Again, each fungicide, taken in isolation, did not control the growth of the fungus whereas the combination showed very strong synergy and provided a significant level of control.

**Claims**

1. A synergistic fungicidal composition for use in the treatment or control of plant diseases caused by or associated with phytopathogenic fungi the composition including:

   at least one conazole fungicide, wherein the conazole fungicide is selected from imazalil, prochloraz, metal complexes thereof and mixtures of any two or more thereof; and
   at least one fungicidal compound which is a fungicidal volatile oil, wherein the fungicidal volatile oil is n-hexanal.

2. The composition of claim 1, wherein the conazole fungicide is imazalil.

3. The composition of claim 1, wherein the ratio between the weights of the at least one conazole fungicide and the at least one volatile oil is between 1:5 and 1 0.25 (w/w).

4. The composition of any one of the preceding claims, which includes a solid carrier, selected from natural resins, synthetic resins, waxes, silicates, clay powders, clay granules, diatomaceous earth, bentonite acidic clay, synthetic silicon oxide hydrate tales, ceramics, sericite, quartz, sulphur, activated charcoal, calcium carbonate, hydrated silica, industrial fertilizers and mixtures of any two or more thereof.

5. The composition of any one of claims 1 to 4 inclusive, which includes a liquid carrier selected from water, alcohols, ketones, petroleum fractions, aromatic hydrocarbons, nonaromatic hydrocarbons, esters, nitriles, ethers, dioxane, amides, halogenated hydrocarbons, dimethyl suphoxide, vegetable oils, fruit coating waxes and mixtures of any two or more thereof.

6. The composition of any one of the preceding claims, which includes a surfactant selected from emulsifying agents, dispersing agents, ionic wetting agents, non-ionic wetting agents and mixtures of any two or more thereof.

7. The composition of claim 6 in which the surfactant is selected from, salts of polyacrylic acids, salts of lignosulphonic acids, salts of phenolsulphonic acids, salts of naphthalenesulphonic acids, polycondensates of ethylene oxide with fatty acids, polycondensates of ethylene oxide with fatty amines, substituted phenols, salts of sulphosuccinic acid esters, derivatives of taurine, phosphoric esters of polyoxyethylated alcohols, phosphoric esters of polyoxyethylated phenols, alkyl sulphonate salts, alkylaryl sulphonates, alkylaryl ethers, polyoxyethylenic derivatives, polyethylene glycol ethers, polyalcohol esters, derivatives of sugars, derivatives of alcohols and mixtures of any two or more thereof.

8. The composition of any one of the preceding claims, which is in a form selected from aerosols, suspensions, cold fogging concentrates, hot fogging concentrates, dustable powders, emulsifiable concentrates, aqueous emulsions, aqueous type emulsions, oil/inverse type emulsions, encapsulated granules, fine granules, suspension concentrates, compressed gases, gas generating products, macrogranules, microgranules, oil-dispersible powders, oil-miscible liquids, pastes, plant rodlets, smoke candles, smoke cartridges, smoke generators, smoke pellets, smoke rodlets, smoke tablets, soluble concentrates, soluble powders, suspension concentrates, flowable concentrates, tracking powders, ultra low volume liquids, ultra low volume suspensions, vapour releasing products, solutions, water dispersible granules, water dispersible tablets, water dispersible powders, water soluble granules, water soluble tablets,

water soluble powders, wettable powder and mixtures of any two or more thereof.

**9.** A method for controlling plant diseases caused by or associated with phytopathogenic organisms on plants or plant products, the method including the step of exposing the plant or plant product to a composition as claimed in any one of claims 1 to 8 inclusive.

**10.** A method for controlling plant diseases caused by or associated with phytopathogenc fungi, the method comprising the steps of applying to the plants or plant products, either sequentially or simultaneously, at least one conazole fungicide selected from imazalil, prochloraz, metal complexes thereof and mixtures of any two or more thereof and at least one fungicidal compound which is a fungicidal volatile oil in which the fungicidal volatile oil is n-hexanal.

**11.** The method as claimed in claim 10 in which the conazole fungicide is selected from imazalil and prochloraz.

**12.** The method as claimed in claim 10 or 11, in which the weight ratio between the at least one conazole fungicide and the at least one volatile oil is between 1:5 and 1 :0.25.

## Patentansprüche

**1.** Synergistische fungizide Zusammensetzung zur Verwendung in der Behandlung oder Kontrolle von Pflanzenkrankheiten, die von phytopathogenen Pilzen verursacht werden oder mit solchen assoziiert sind, umfassend:

wenigstens ein Conazol-Fungizid, wobei das Conazol-Fungizid ausgewählt ist aus Imazalil, Prochloraz, Metallkomplexen davon und Gemischen von zwei oder mehreren davon; und
wenigstens eine fungizide Verbindung, die ein fungizides flüchtiges Öl ist, wobei das fungizide flüchtige Öl n-Hexanal ist.

**2.** Zusammensetzung nach Anspruch 1, wobei das Conazol-Fungizid Imazalil ist.

**3.** Zusammensetzung nach Anspruch 1, wobei das Verhältnis zwischen den Gewichten des wenigstens einen Conazol-Fungizids und des wenigstens einen flüchtigen Öls zwischen 1:5 und 1:0,25 (w/w) ist.

**4.** Zusammensetzung nach einem der vorangehenden Ansprüche, die einen festen Träger umfasst, ausgewählt aus natürlichen Harzen, Kunstharzen, Wachsen, Silikaten, Tonmehlen, Tongranulaten, Kieselgur, saurem Bentonit-Ton, synthetischen Siliciumoxidhydrat-Talkum, Keramiken, Sericit, Quarz, Schwefel, Aktivkohle, Calciumcarbonat, Kieselsäurehydrat, Industriedüngemitteln und Gemischen von zwei oder mehreren davon.

**5.** Zusammensetzung nach einem der Ansprüche 1 bis einschließlich 4, die einen flüssigen Träger umfasst, ausgewählt aus Wasser, Alkoholen, Ketonen, Erdölfraktionen, aromatischen Kohlenwasserstoffen, nichtaromatischen Kohlenwasserstoffen, Estern, Nitrilen, Ethern, Dioxan, Amiden, Halogenkohlenwasserstoffen, Dimethylsulfoxid, Pflanzenölen, Obstbeschichtungswachsen und Gemischen aus zwei oder mehreren davon.

**6.** Zusammensetzung nach einem der vorangehenden Ansprüche, die ein Tensid enthält, ausgewählt aus Emulgatoren, Dispergiermitteln, ionischen Netzmitteln, nichtionischen Netzmitteln und Gemischen aus zwei oder mehreren davon.

**7.** Zusammensetzung nach Anspruch 6, in der das Tensid ausgewählt ist aus Salzen von Polyacrylsäuren, Salzen von Ligninsulfonsäuren, Salzen von Phenolsulfonsäuren, Salzen von Naphthalinsulfonsäuren, Polykondensaten von Ethylenoxid mit Fettsäuren, Polykondensaten von Ethylenoxid mit Fettaminen, substituierten Phenolen, Salzen von Sulfobernsteinsäureestern, Taurin-Derivaten, Phosphorestern von polyoxyethylierten Alkoholen, Phosphorestern von polyoxyethylierten Phenolen, Alkylsulfonatsalzen, Alkylarylsulfonaten, Alkylarylethern, Polyoxyethylen-Derivaten, Polyethylenglykolethern, Polyalkoholestern, Zuckerderivaten, Alkoholderivaten und Gemischen von zwei oder mehreren davon.

**8.** Zusammensetzung nach einem der vorangehenden Ansprüche, die in einer Form vorliegt, die ausgewählt ist aus Aerosolen, Suspensionen, Kaltnebelkonzentraten, Heißnebelkonzentraten, verstäubbaren Pulvern, emulgierbaren Konzentraten, wässrigen Emulsionen, wasserähnlichen Emulsionen, Öl-/inversen Emulsionen, verkapseltem Granulat, Feingranulat, Suspensionskonzentraten, komprimierten Gasen, gaserzeugenden Produkten, Makrogranulat, Mikrogranulat, öldispergierbaren Pulvern, ölmischbaren Flüssigkeiten, Pasten, Pflanzenstäbchen, Rauchkerzen,

Rauchpatronen, Raucherzeugern, Rauch-Pellets, Rauchstäbchen, Rauchtabletten, löslichen Konzentraten, löslichen Pulvern, Suspensionskonzentraten, fließfähigen Konzentraten, Streupulvern, Ultra-Low-Volume-Flüssigkeiten, Ultra-Low-Volume-Suspensionen, dampfabgebenden Produkten, Lösungen, wasserdispergierbarem Granulat, wasserdispergierbaren Tabletten, wasserdispergierbaren Pulvern, wasserlöslichem Granulat, wasserlöslichen Tabletten, wasserlöslichen Pulvern, benetzbarem Pulver und Gemischen aus zwei oder mehreren davon.

**9.** Verfahren zur Kontrolle von Pflanzenkrankheiten, die von phytopathogenen Organismen auf Pflanzen oder Pflanzenprodukten verursacht werden oder mit solchen assoziiert sind, wobei das Verfahren den Schritt umfasst, die Pflanze oder das Pflanzenprodukt einer Zusammensetzung nach einem der Ansprüche 1 bis einschließlich 8 auszusetzen.

**10.** Verfahren zur Kontrolle von Pflanzenkrankheiten, die von phytopathogenen Pilzen verursacht werden oder mit solchen assoziiert sind, wobei das Verfahren die Schritte des aufeinanderfolgenden oder gleichzeitigen Aufbringens auf die Pflanzen oder Pflanzenprodukte wenigstens eines Conazol-Fungizids umfasst, ausgewählt aus Imazalil, Prochloraz, Metallkomplexen davon und Gemischen aus zwei oder mehreren davon, und wenigstens einer fungiziden Verbindung, die ein fungizides flüchtiges Öl ist, in dem das fungizide flüchtige Öl n-Hexanal ist.

**11.** Verfahren nach Anspruch 10, in dem das Conazol-Fungizid aus Imazalil und Prochloraz ausgewählt ist.

**12.** Verfahren nach Anspruch 10 oder 11, in dem das Gewichtsverhältnis zwischen dem wenigstens einen Conazol-Fungizid und dem wenigstens einen flüchtigen Öl zwischen 1:5 und 1:0,25 beträgt.

## Revendications

**1.** Composition fongicide synergique pour l'utilisation dans le traitement ou le contrôle des maladies de plante provoquées par ou associées à des champignons phytopathogènes, la composition comprenant :

au moins un fongicide à base de conazole, le fongicide à base de conazole étant choisi parmi l'imazalil, le prochloraz, leurs complexes métalliques et les mélanges en contenant deux ou plus de deux ; et
au moins un composé fongicide qui est une huile fongicide volatile, l'huile fongicide volatile étant le n-hexanal.

**2.** Composition selon la revendication 1, dans laquelle le fongicide à base de conazole est l'imazalil.

**3.** Composition selon la revendication 1, dans laquelle le rapport entre les poids du au moins un fongicide à base de conazole et de la au moins une huile volatile est situé entre 1/5 et 1/0,25 (poids/poids).

**4.** Composition selon l'une quelconque des revendications précédentes, qui comprend un support solide choisi parmi les résines naturelles, les résines synthétiques, les cires, les silicates, les poudres d'argile, les granulés d'argile, la terre de diatomées, l'argile acide bentonite, les rubans d'hydrate d'oxyde de silicium synthétique, les céramiques, la séricite, le quartz, le soufre, le charbon actif, le carbonate de calcium, la silice hydratée, les engrais industriels et les mélanges en contenant deux ou plus de deux.

**5.** Composition selon l'une quelconque des revendications 1 à 4 incluse, qui comprend un support liquide choisi parmi l'eau, les alcools, les cétones, les fractions de pétrole, les hydrocarbures aromatiques, les hydrocarbures non aromatiques, les esters, les nitriles, les éthers, le dioxanne, les amides, les hydrocarbures halogénés, le diméthylsulfoxyde, les huiles végétales, les cires de revêtement de fruit et les mélanges en contenant deux ou plus de deux.

**6.** Composition selon l'une quelconque des revendications précédentes, qui comprend un tensioactif choisi parmi les agents émulsifiants, les agents de dispersion, les agents ioniques mouillants, les agents non ioniques mouillants et les mélanges en contenant deux ou plus de deux.

**7.** Composition selon la revendication 6, dans laquelle le tensioactif est choisi parmi les sels de poly(acides acryliques), les sels d'acides ligno-sulfoniques, les sels d'acides phénolsulfoniques, les sels d'acides naphtalènesulfoniques, les polycondensats d'oxyde d'éthylène avec des acides gras, les polycondensats d'oxyde d'éthylène avec des amines grasses, les phénols substitués, les sels d'esters d'acides sulfosucciniques, les dérivés de taurine, les esters phosphoriques d'alcools polyoxyéthylés, les esters phosphoriques de phénols polyoxyéthylés, les sels de sulfonates d'alkyle, les sulfonates d'alkyl-aryle, les alkylaryléthers, les dérivés polyoxy-éthyléniques, les polyéthylèneglycoléthers, les poly-alcoolesters, les dérivés de sucres, les dérivés d'alcool et les mélanges en contenant deux ou plus de deux.

**8.** Composition selon l'une quelconque des revendications précédentes, qui est sous une forme choisie parmi les aérosols, les suspensions, les concentrés pour nébulisation à froid, les concentrées pour nébulisation à chaud, les poudres pour poudrage, les concentrés émulsionnables, les émulsions aqueuses, les émulsions de type aqueux, les émulsions de type huile/inverse, les granulés encapsulés, les granulés fins, les concentrés en suspension, les gaz comprimés, les produits générant un gaz, les macrogranulés, les microgranulés, les poudres dispersibles dans l'huile, les liquides oléo-miscibles, les pâtes, les bâtonnets de plantes, les fumigènes, les cartouches fumigènes, les générateurs de fumée, les granulés fumigènes, les bâtonnets fumigènes, les comprimés fumigènes, les concentrés solubles, les poudres solubles, les concentrés en suspension, les concentrés fluides, les poudres de piste, les liquides à volume ultra-faible, les suspensions à volume ultra-faible, les produits libérant une vapeur, les solutions, les granulés dispersibles dans l'eau, les comprimés dispersibles dans l'eau, les poudres dispersibles dans l'eau, les granulés hydrosolubles, les comprimés hydrosolubles, les poudres hydrosolubles, les poudres mouillables et les mélanges en contenant deux ou plus de deux.

**9.** Procédé de lutte contre des maladies de plante provoquées par ou associées à des organismes phytopathogènes sur les plantes ou des produits de plante, le procédé comprenant l'étape d'exposition de la plante ou du produit de plante à une composition selon l'une quelconque des revendications 1 à 8 incluse.

**10.** Procédé de lutte contre des maladies de plante provoquées par ou associées à des champignons phytopathogènes, le procédé comprenant l'étape d'application sur les plantes ou des produits de plante, séquentiellement ou simultanément, d'au moins un fongicide à base de conazole choisi parmi l'imazalil, le prochloraz, leurs complexes métalliques et les mélanges en contenant deux ou plus de deux et d'au moins un composé fongicide qui est une huile fongicide volatile, dans lequel l'huile fongicide volatile est le n-hexanal.

**11.** Procédé selon la revendication 10, dans lequel le fongicide à base de conazole est choisi parmi l'imazalil et le prochloraz.

**12.** Procédé selon la revendication 10 ou 11, dans lequel le rapport pondéral entre le au moins un fongicide à base de conazole et la au moins une huile volatile est situé entre 1/5 et 1/0,25.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 9912422 A
- WO 03011030 A
- WO 0315605 A
- JP 2004208558 A
- US 6045844 A
- WO 1993006735 A


### Non-patent literature cited in the description


- **JIANJUN LUO ; QUNFANG WENG.** Control of citrus postharvest green and blue mold by tea saponin combined with imazalil and procloraz. *Postharvest Biology,* 2009, vol. 56, 39-43
- **LISA J. SKOG.** *Use of natural fruit volatiles for reduction of postharvest rot of stonefruits and pears,* 2000
- **TRIPATHI P ; DUBEY NK.** Exploitation of natural products as an alternative strategy to control postharvest fungal rotting of fruit and vegetables. *Postharvest Biology and Technology,* 2004, vol. 32, 235-245
- **MOHINI SHARMA ; JISSY K. JACOB.** *Hexanal and 1-MCP treatments for enhancing the shelf life and quality of sweet cherry (Prunus avium.),* 2010